(19)

Europäisches Patentamt
European Patent Office
Office européen des brevets

(11)  **EP 2 388 890 A1**

(12)  **EUROPEAN PATENT APPLICATION**

(43) Date of publication:
    **23.11.2011 Bulletin 2011/47**

(51) Int Cl.:
    *H02K 3/14* *(2006.01)*   *H02K 3/28* *(2006.01)*
    *H02K 3/02* *(2006.01)*   *H02K 7/18* *(2006.01)*

(21) Application number: **10163301.4**

(22) Date of filing: **19.05.2010**

(84) Designated Contracting States:
    **AL AT BE BG CH CY CZ DE DK EE ES FI FR GB GR HR HU IE IS IT LI LT LU LV MC MK MT NL NO PL PT RO SE SI SK SM TR**
    Designated Extension States:
    **BA ME RS**

(71) Applicant: **SIEMENS AKTIENGESELLSCHAFT 80333 München (DE)**

(72) Inventors:
    • **Groendahl, Erik 8653, Them (DK)**
    • **Kimiabeigi, Mohammad 7330, Brande (DK)**
    • **Stiesdal, Henrik 5000, Odense C (DK)**

(54)  **Generator with aluminium winding and wind turbine**

(57)    A generator (76) comprising at least one conductor (5, 8) is disclosed. The conductor (5, 8) comprises aluminium. Preferably, the generator (76) comprises at least one pole set representing one phase (1, 2, 3), each pole set comprising a number of poles (4), and the at least one conductor (8) is turned about the poles (4) of the particular pole set such that only half a single turn (8a, 8b, 8c, 8d) is associated to each pole (4a, 4b, 4c, 4d).

## FIG 3

EP 2 388 890 A1

**Description**

The present invention relates to a generator and to a wind turbine.

In a direct drive permanent magnet generator windings are typically made of copper which is a relatively heavy metal and thereby results in a heavy generator which may create difficulties for transport and mantling of the generator.

The power efficiency of a generator, especially of a large direct drive generator, can be increased by reducing the weight of the generator. Moreover, the installation of a generator in an electrical machine or power plant can be simplified if the weight of the generator is reduced. A reduced weight of the generator would also reduce the installation costs.

Therefore, it is a first objective of the present invention to provide a generator, where the winding weight is reduced. It is a second objective of the present invention to provide an advantageous wind turbine.

The first objective is solved by a generator as claimed in claim 1. The second objective is solved by a wind turbine as claimed in claim 14. The depending claims define further developments of the invention.

The inventive generator comprises at least one conductor. The conductor comprises aluminium. The at least one conductor can be only made of aluminium.

The idea is to use aluminium windings instead of copper. The use aluminium instead of copper is advantageous, because aluminium has electrical conductivity of about 60% of the electrical conductivity of copper, but a mass density of only 30% of the mass density of copper. Therefore, it is advantageous to use more aluminium, e.g. 60% or more, volume-wise by increasing the slot area, compared with conventional copper windings. A similar or the same winding resistance can be obtained as for conventional copper windings. Furthermore, a significant reduction in the total winding weight by roughly 52% may be achieved:

$$m_{Al} = \frac{\rho_{Al} \cdot V_{Al} \cdot m_{cu}}{\rho_{cu} \cdot V_{cu}} \approx 0.3 * 1.6 * m_{cu} = 0.48 m_{cu} \, ,$$

where ρ is the mass density, V the volume and m is the weight.

Considering the thermal properties of aluminium and copper, see table.1:

Table.1 Mass, electrical and thermal properties of aluminium and copper, intended for comparison.

|  | Mass density ρ | Electrical resistivity (Ω*m) | Thermal Conductivity (W/m*K) | Specific heat capacity (kJ/kg*K) | Resistance coefficient of temperature (1/K) |
|---|---|---|---|---|---|
| aluminium | 2700 | $2.82 \times 10^{-8}$ | 205.0 | 0.91 | 0.0043 |
| copper | 8960 | $1.722 \times 10^{-8}$ | 385.0 | 0.39 | 0.0040 |

The temperature rise would be 11% lower in aluminium winding compared to copper winding which is an advantage:

$$\frac{\Delta \mathrm{T}_{Al}}{\Delta \mathrm{T}_{Cu}} = \frac{\dfrac{Q_{Al}}{m_{Al} \cdot c_{Al}}}{\dfrac{Q_{Cu}}{m_{Cu} \cdot c_{Cu}}} = \frac{m_{Cu} \cdot c_{Cu}}{m_{Al} \cdot c_{Al}} \approx 0.89 \, ,$$

where, c is the specific heat capacity and Q is the loss energy in the windings which is assumed to be the same for both types of winding. Regarding the resistance increase at higher temperatures, the aluminium resistance would be about 7.5% higher than copper for the same temperature rise, which is due to a larger temperature coefficient of aluminium. Hence, the aluminium winding resistance would not be larger than copper winding due to temperature rise but even might be less.

In the present invention the relatively heavy copper as winding material in direct drive generators is at least partly replaced by aluminium, which has a much lower mass density. The right selection also stops compromising on the electrical and thermal conductivity of the winding and to some extent even improves it. Furthermore, this choice is more motivated by the need to have a more flexible and softer material that simplifies the winding manufacturing in direct drive generator technology.

The inventive generator may comprise at least one pole set. One pole set may represent one phase. Each pole set can comprise a number of poles. At least one conductor can be turned about the poles of the particular pole set such that only half a single turn is associated to each pole. Preferably, a number of conductors which are connected in parallel are turned about the poles such that only half a single turn of each conductor is associated to each pole.

Compared with a conventional coil composed of more than one series turn, the insulation between the conductors placed together in a slot of the inventive generator can significantly be reduced. This improves the slot fill factor resulting in higher torque or efficiency. Moreover, the inventive generator provides the possibility for a better cooling of, for example, a permanent magnet generator. The inventive generator may, for example, be used in direct drive wind turbine applications.

In the inventive generator single turn wave winding replaces the conventional windings. The idea is that each phase in, for example, a three phase or multi phase generator has a single Go or Return path in each pole. In the frame work of the present invention a single Go or Return path is also designated as half a single turn. The Go and Return paths or half a single turns may form a wave configuration. For example, a single Go path may itself be composed of a number of parallel conductors. The parallel conductors return in the next pole and continue this way of distribution along the whole circumference of, for example, the stator of the generator. This gives the advantage of having less insulation in the slot. Thereby, a better cooling of the windings can be achieved and a higher slot fill factor can be realised.

Advantageously, between 5 and 25, preferably between 10 and 20, conductors may be connected in parallel. Assuming that the same slot dimension as for conventional multi-turn windings is used for the wave winding, 10 to 20 parallel conductors or in that range will form the winding in order to reduce the proximity and skin effect losses. The optimal number of parallel conductors to give a low value of proximity and skin effect loss can be chosen analytically or can be obtained by a simulation or can be obtained experimentally.

The conductors can be transposed from one pole to another pole. This improves the elimination of extra AC losses, for example losses due to the proximity and skin effect. The conductors can be partially or fully transposed in each or every second and winding. Advantageously, the conductors may be transposed at every neighbouring pole or at every second neighbouring pole of the particular pole set. Preferably, the number of poles in a pole set may be an integer multiple of the number of the conductors connected in parallel. To have completely balance out the extra AC loss a full transposition may be used, i.e. to transpose every parallel conductor at every pole while choosing the number of poles to be in integer multiple of the number of parallel conductors. Having a different number of poles than what is mentioned will still be an option, but with some extend higher relative AC loss due to proximity effect.

The inventive generator may comprise an even number of poles per pole set. In a preferred embodiment of the invention such as for a generator for a direct drive wind turbine the number of poles is equal to or above 100. For example, the generator may comprise at least 1 pole set, preferably 3 pole sets. Furthermore, the generator may be a direct drive generator. Generally, the generator may comprise a stator and a rotor. The stator may comprise the at least one pole set. Alternatively or additionally the rotor may comprise the at least one pole set.

In the proposed type of single turn winding, the number of poles may be equal to the sum of Go and Return paths of each phase winding. This means, that the number of poles may be equal to the sum of the half a single turns.

In the present invention, the series turns made of copper in the slot are replaced effectively by aluminium windings. Preferably, additionally the series turns in the slot are replaced effectively by half a single turns or single wave winding which needs much less thinner insulation and increases the fill factor. The needed thinner insulation is caused by a less voltage difference between the series turns in one slot in the inventive generator. Taking the advantage of having less insulation for conductors and all the following improvement of the generator performance, some draw backs like high extra AC loss due to proximity and skin effect are reduced by transposing the conductors in an efficient way.

The increased fill factor caused by using half a single turns or single wave winding instead of conventional series turns allows having a larger conductor area of aluminium without a need to change the overall design dimensions significantly.

The inventive wind turbine comprises an inventive generator as previously described. The inventive wind turbine has the same advantages as the inventive generator. Further features, properties and advantages of the present invention will become clear from the following description of an embodiment in conjunction with the accompanying drawings. All mentioned features and properties are advantageous alone or in any combination with each other.

Figure 1     schematically shows a wind turbine.

Figure 2     schematically shows a comparative illustration of multi-turn and single turn wave windings for one phase and four poles.

Figure 3    schematically shows part of a single turn wave windings of the lower part of figure 2 in a perspective view.

Figure 4    schematically shows the AC loss factor dependency for single turn winding of the number of parallel, fully transposed conductors.

Figure 5    schematically shows an arrangement of fully transposed 5 parallel conductors belonging to one phase.

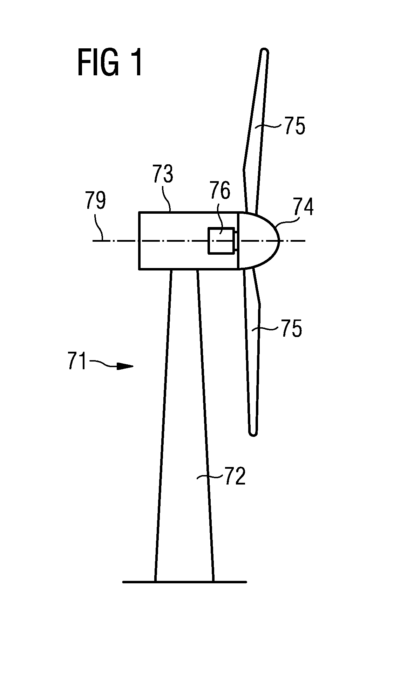

An embodiment of the present invention will now be described with reference to Figures 1 to 5.

Figure 1 schematically shows a wind turbine 71. The wind turbine 71 comprises a tower 72, a nacelle 73 and a hub 74. The nacelle 73 is located on top of the tower 72. The hub 74 comprises a number of wind turbine blades 75. The hub 74 is mounted to the nacelle 73. Moreover, the hub 74 is pivot-mounted such that it is able to rotate about a rotation axis 79. A generator 76 is located inside the nacelle 73. The wind turbine 71 is a direct drive wind turbine.

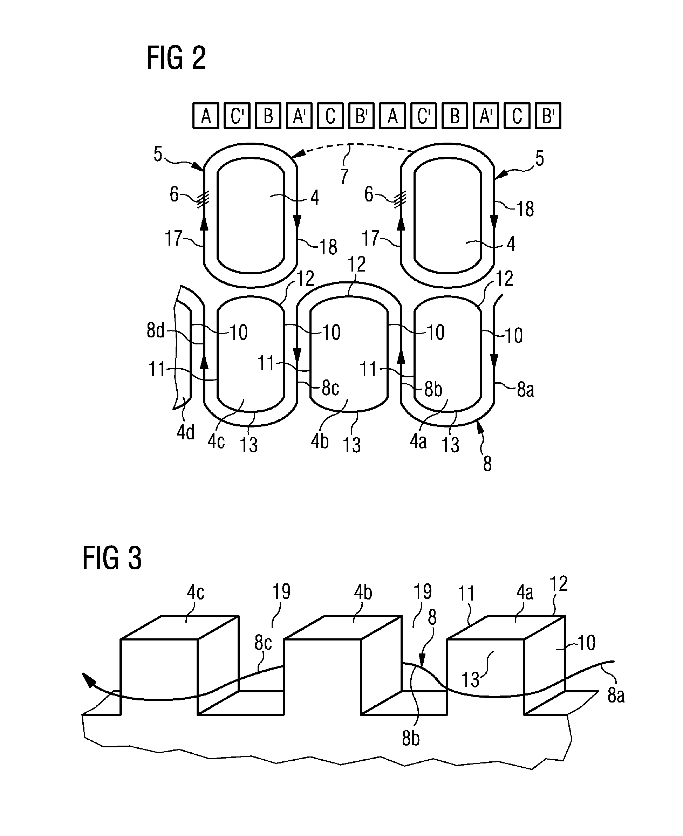

Figure 2 schematically shows a comparative illustration of multi-turn and single turn wave windings for one phase and four poles. The upper part of Figure 2 shows the distributed winding with slots per pole and phase equal to 1 for a 3-phase machine, phases A, B and C. A, B and C correspond to Go direction of the phases and A', B' and C' correspond to Return direction, i.e. opposite direction, of the phases.

In the middle part of Figure 2 two poles 4 representing the first phase are shown. Each of the poles 4 comprises a number of conductor windings 5 with multiple-turns per pole 4. The strokes 6 indicate the more than one series turns. The conductors 5 are connected in series. This is indicated by the dashed line 7. Due to the series turns each of the poles 4 or coils comprises a number of Go paths 17 and a number of Return paths 18. In the present invention the conductors 5 comprise aluminium.

The lower part of Figure 2 schematically shows the inventive single turn wave windings for one phase of a preferable generator. The pole set belonging to the first phase A comprises a number of poles 4, from which four poles 4a, 4b, 4c and 4d are shown. Generally, the poles 4 may comprise a lamination.

Each pole 4 comprises a right side 10, a left side 11, a front side 12 and a back side 13. A conductor 8 is wave-like turned about the poles 4. The conductor 8 comprises aluminium or is made of aluminium. The conductor 8 comprises a first half turn 8a, a second half turn 8b, a third half turn 8c and a fourth half turn 8d. The first half turn 8a represents a Return path A', the second half turn 8b represents a Go path A, the third half turn 8c represents a Return path A' and the fourth half turn 8d represents a Go path A.

The first half turn 8a proceeds along the right side 10 of the first pole 4a and proceeds further along the back side 13 of the first pole 4a. Then it proceeds further along the left side 11 of the first pole 4a and at the same time along the right side 11 of the second pole 4b. This means, that the conductor passes a slot between the first pole 4a and the second pole 4b. Then the conductor 8 further proceeds along the front side 11 of the second pole 4b, then along the left side 11 of the second pole 4b and at the same time along the right side 10 of the third pole 4c. The conductor 8 further proceeds along the back side 13 of the third pole 4c and along the left side of the third pole 4c and at the same time along the right side 10 of the fourth pole 4d.

In this wave-like configuration the first half a turn 8a is associated to the first pole 4a, the second half a turn 8b is associated to the second pole 4b, the third half a turn 8c is associated to the third pole 4c and the fourth half a turn 8d is associated to the fourth pole 4d. Figure 3 schematically shows part of the single turn wave windings of the lower part of Figure 2 in a perspective view. The poles 4 are separated from each other by slots 19.

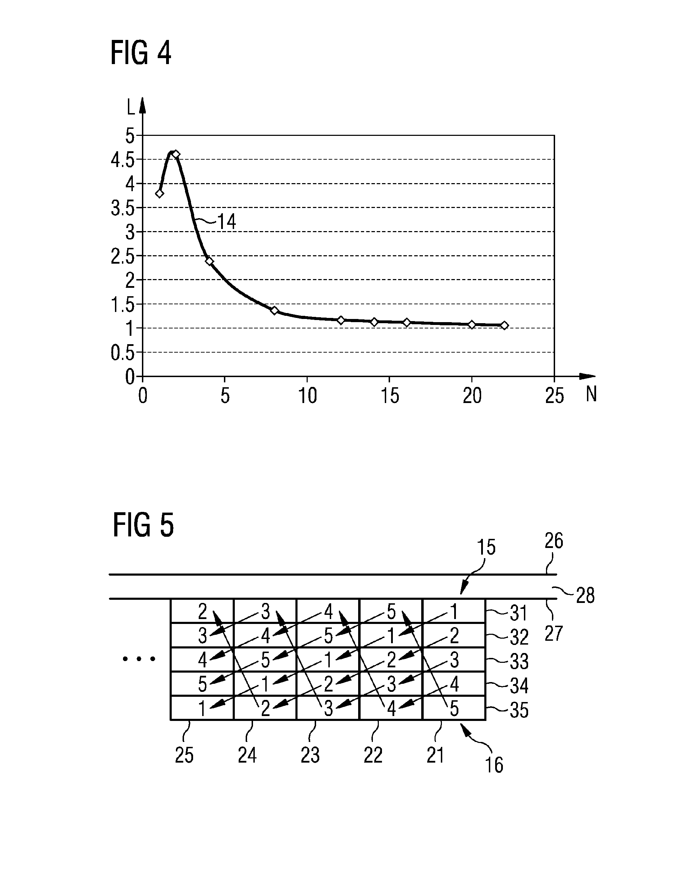

A number of conductors 8 are connected in parallel and are turned about the poles in such a way that only half a single turn of each conductor is associated to each pole, as shown in the lower part in Figure 2 and in Figure 3. The optimal number of parallel conductors to give a low value of proximity and skin effect loss can be chosen analytically or experimentally or by simulation. An example is shown in Figure 4.

Figure 4 schematically shows the AC loss factor for single turn windings versus the number of parallel conductors which are always assumed to be fully transposed. The x-axis represents the number N of parallel and fully transposed conductors. The y-axis represents the AC loss factor L for a single turn winding in arbitrary units. The AC loss factor is caused by proximity and skin effect losses. The obtained curved 14 in Figure 4 shows a maximum AC loss factor for about two parallel conductors. With a further increasing number of parallel conductors the AC loss factor decreases nearly exponentially. For eight and more parallel conductors the AC loss factor L decreases only minimally. The curve 14 shows for ten and more parallel conductors a nearly straight line which is nearly parallel to the x-axis. This means, that the optimal number of parallel conductors to give a low value of proximity and skin effect loss is ten and more.

Figure 5 schematically shows an arrangement of fully transposed 5 parallel conductors belonging to one phase. In the shown arrangement the first pole 21 is followed by a second pole 22, followed by a third pole 23, followed by a fourth pole 24, which is followed by a fifth pole 25 and so forth. Each of the poles 21, 22, 23, 24 and 25 comprises an upper side 15 and a bottom side 16. The different conductors are designated by numbers 1 to 5. Each pole 21, 22, 23, 24 and 25 comprises five positions, a first position 31, a second position 32, a third position 33, a fourth position 34 and a fifth position 35, which follow each other from the upper side 15 to the bottom side 16.

In the first pole 21 the first conductor 1 is located at the first position 31, the second conductor 2 is located at the second position 32, the third conductor 3 is located at the third position 33, the fourth conductor 4 is located at the forth position 34 and the fifth conductor 5 is located at the fifth position 35.

In the second pole 22 the next half a turn of the first conductor 1 changes to the second position 32, the next half a turn of the second conductor 2 changes to the third position, the next half a turn of the third conductor 3 changes to the fourth position 34 and the next half a turn of the fourth conductor 4 changes to the fifth position 35. The next half a turn of the fifth conductor 5 changes from the fifth position 35 in the first pole 21 to the first position 31 in the second pole 22. This pattern is continued for the next poles as shown in Figure 5. By arranging the conductors as shown in Figure 5 the 5 parallel conductors are completely transposed.

In the present embodiment the generator comprises three phases, which means that it comprises three pole sets. Each pole set comprises ten poles. The pattern which is shown in Figure 5 is cyclically repeated for the other 5 poles which are not shown in Figure 5. Generally, the generator comprises a rotor 26, a stator 27 and an airgap 28 between the rotor 26 and the stator 27. The stator 27 comprises the poles shown in Figure 5. Alternatively, the rotor 26 may comprise the poles shown in Figure 5.

Generally, the generator 76 can comprise an inner stator, which means that the stator is located radially inside of the rotor of the generator related to the rotation axis 79 of the rotor. Alternatively, the generator can comprise an outer stator, which means that the stator is located radially outside of the rotor of the generator related to the rotation axis 79 of the rotor. In both cases the rotor and/or the stator can comprise the described single turn wave winding.

Based on the described transposed single turn wave winding configuration, it is theoretically clear that the parallel conductors in the slot may need no insulation or only some varnish as there is none or very small voltage difference between these parallel conductors.

Furthermore, using aluminium conductors, which are softer and more flexible than conventional copper conductors, and additionally using the described single turn wave-like winding the manufacturing of the coils and the winding process becomes significantly easier and less costly than for conventional windings.

**Claims**

1. A generator (76) comprising at least one conductor (5, 8),
   **characterised in that**
   the conductor (5, 8) comprises aluminium.

2. The generator (76) as claimed in claim 1,
   **characterised in that**
   the at least one conductor (5, 8) is made of aluminium.

3. The generator (76) as claimed in any of the claims 1 or 2,
   **characterised in that**
   the generator (76) comprises at least one pole set representing one phase (1, 2, 3), each pole set comprising a number of poles (4), and the at least one conductor (8) is turned about the poles (4) of the particular pole set such that only half a single turn (8a, 8b, 8c, 8d) is associated to each pole (4a, 4b, 4c, 4d).

4. The generator (76) as claimed in claim 3,
   **characterised in that**
   a number of conductors (8) which are connected in parallel are turned about the poles (4) such that only half a single turn (8a, 8b, 8c, 8d) of each conductor (8) is associated to each pole (4a, 4b, 4c, 4d).

5. The generator (76) as claimed in any of the claims 1 to 4,
   **characterised in that**
   between 5 and 25 conductors (8) are connected in parallel.

6. The generator (76) as claimed in claim 5,
   **characterised in that**
   between 10 and 20 conductors (8) are connected in parallel.

7. The generator (76) as claimed in any of the claims 3 to 6,
   **characterised in that**
   the conductors (8) are transposed from one pole (4a, 4b, 4c, 4d) to another pole (4a, 4b, 4c, 4d).

**8.** The generator (76) as claimed in claim 7,
**characterised in that**
the conductors (8) are transposed at every neighbouring pole (4) or at every second neighbouring pole (4) of the particular pole set.

**9.** The generator (76) as claimed in any of the claims 4 to 8,
**characterised in that**
the number of poles (4) in a pole set is an integer multiple of the number of the conductors (8) connected in parallel.

**10.** The generator (76) as claimed in any of the claims 3 to 9,
**characterised in that**
the generator (76) comprises an even number of poles (4) per pole set.

**11.** The generator (76) as claimed in any of the claims 3 to 10,
**characterised in that**
the generator (76) comprises at least one pole set.

**12.** The generator (76) as claimed in any of the claims 3 to 11,
**characterised in that**
the generator (76) is a direct drive generator.

**13.** The generator (76) as claimed in any of the claims 3 to 12,
**characterised in that**
the generator (76) comprises a stator which comprises the at least one pole set.

**14.** A wind turbine (71) comprising a generator (76) as claimed in any of the claims 1 to 13.

FIG 1

FIG 2

| A | C' | B | A' | C | B' | A | C' | B | A' | C | B' |

FIG 3

## FIG 4

## FIG 5

Europäisches
Patentamt

European
Patent Office

Office européen
des brevets

# EUROPEAN SEARCH REPORT

**Application Number**

EP 10 16 3301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/315329 A1 (DUFFEY CHRISTOPHER K [US] ET AL) 24 December 2009 (2009-12-24) | 1,2 | INV.<br>H02K3/14<br>H02K3/28<br>H02K3/02 |
| Y | * paragraph [0041] *<br>* paragraph [0054] * | 3-14 | |
| Y | US 2002/050395 A1 (KUSUMOTO KATSUHIKO [JP] ET AL) 2 May 2002 (2002-05-02)<br>* paragraph [0002] *<br>* paragraph [0068] - paragraph [0070] *<br>* paragraph [0075]; figures 1-12, 18-20 * | 3-14 | ADD.<br>H02K7/18 |
| X | WO 97/45920 A1 (ASEA BROWN BOVERI [SE]; IMRELL ANN MARI & HF [SE]; LEIJON MATS [SE]; J) 4 December 1997 (1997-12-04)<br>* page 2, line 20 - page 3, line 1 * | 1,2 | |
| X | DE 32 11 338 A1 (MASCHF AUGSBURG NUERNBERG AG [DE]) 6 October 1983 (1983-10-06)<br>* claims 1, 5 * | 1,2 | |
| X | DE 18 03 419 A1 (ROLLS ROYCE) 19 June 1969 (1969-06-19)<br>* page 3, last paragraph - page 4, paragraph first * | 1,2 | TECHNICAL FIELDS SEARCHED (IPC)<br><br>H02K |
| A | JP 8 182235 A (HONDA MOTOR CO LTD) 12 July 1996 (1996-07-12)<br>* abstract; figures 7a-7c, 8 * | 7-9 | |
| A | DE 35 43 106 A1 (KABELMETAL ELECTRO GMBH [DE]) 11 June 1987 (1987-06-11)<br>* column 3, line 37 - line 38 *<br>* column 4, line 13 - line 43; figures * | 1-7 | |

-/--

The present search report has been drawn up for all claims

| Place of search | Date of completion of the search | Examiner |
|---|---|---|
| The Hague | 18 January 2011 | Zanichelli, Franco |

Europäisches
Patentamt

European
Patent Office

Office européen
des brevets

# EUROPEAN SEARCH REPORT

Application Number

EP 10 16 3301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2010/036741 A2 (AEROVIRONMENT INC [US]; RIPPEL WALLEY [US]; DABOUSSI ZAHER [US]; HORI) 1 April 2010 (2010-04-01)<br>* paragraph [0033] - paragraph [0038]; figures 5-9 *<br>----- | 5,6 | |
| A | WO 2005/122367 A1 (KOEHLER GERARD [FR]) 22 December 2005 (2005-12-22)<br>* page 10, line 22 - page 12, line 14; figures 2, 3, 7-10 *<br>* page 14, line 4 - line 6; figure 16 *<br>----- | 14 | |

TECHNICAL FIELDS
SEARCHED      (IPC)

The present search report has been drawn up for all claims

| Place of search | Date of completion of the search | Examiner |
|---|---|---|
| The Hague | 18 January 2011 | Zanichelli, Franco |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 10 16 3301

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2011

| Patent document cited in search report | | Publication date | Patent family member(s) | | Publication date |
|---|---|---|---|---|---|
| US 2009315329 | A1 | 24-12-2009 | WO | 2009155467 A2 | 23-12-2009 |
| US 2002050395 | A1 | 02-05-2002 | DE 10113831 A1<br>FR 2811487 A1<br>JP 2002027693 A<br>KR 20020005955 A | | 07-02-2002<br>11-01-2002<br>25-01-2002<br>18-01-2002 |
| WO 9745920 | A1 | 04-12-1997 | AU 3052297 A<br>CN 1226348 A<br>EP 1016189 A1<br>JP 2000511684 T<br>US 2002053461 A1 | | 05-01-1998<br>18-08-1999<br>05-07-2000<br>05-09-2000<br>09-05-2002 |
| DE 3211338 | A1 | 06-10-1983 | NONE | | |
| DE 1803419 | A1 | 19-06-1969 | FR 1588007 A<br>GB 1174969 A | | 03-04-1970<br>17-12-1969 |
| JP 8182235 | A | 12-07-1996 | JP 2901888 B2 | | 07-06-1999 |
| DE 3543106 | A1 | 11-06-1987 | US 4785138 A | | 15-11-1988 |
| WO 2010036741 | A2 | 01-04-2010 | US 2010194231 A1<br>US 2010194218 A1<br>US 2010187922 A1<br>WO 2010036743 A1<br>WO 2010036745 A2 | | 05-08-2010<br>05-08-2010<br>29-07-2010<br>01-04-2010<br>01-04-2010 |
| WO 2005122367 | A1 | 22-12-2005 | EP 1774640 A1<br>FR 2876231 A1<br>JP 2007536888 T<br>US 2008258572 A1 | | 18-04-2007<br>07-04-2006<br>13-12-2007<br>23-10-2008 |

EPO FORM P0459

For more details about this annex : see Official Journal of the European Patent Office, No. 12/82